# EUROPÄISCHE PATENTSCHRIFT

(11) **EP 4 802 594 B1**
(45) Veröffentlichungstag und Bekanntmachung des Hinweises auf die Patenterteilung: **04.11.2026**
(21) Anmeldenummer: 25842020.7
(22) Anmeldetag: 19.12.2025
(51) Int. Cl.: H02J 3/28, H02J 15/30

(54) **HUBSPEICHERWERK**
GRAVITY ENERGY STORAGE PLANT
MÉCANISME DE STOCKAGE PAR LEVAGE

(30) Priorität: 26.12.2024 DE 102024139761; 28.04.2025 DE 102025116347
(43) Veröffentlichungstag der Anmeldung: 09.09.2026
(73) Patentinhaber: Excellence GmbH Obhutsverwaltung/exklusive Konzeptionierungen für erlesene Liegenschaften und Vermögensanlagen, 60528 Frankfurt am Main (DE)
(72) Erfinder: HARAZIM, Wolfgang, 08066 Zwickau (DE)
(74) Vertreter: Werner, André
(86) Internationale Anmeldenummer: PCT/IB2025/063235
(87) Internationale Veröffentlichungsnummer: WO 2026/105102

(56) Entgegenhaltungen:
- WO-A1-2024/002512
- WO-A2-2008/135043
- CN-A- 115 490 178
- CN-A- 116 505 666
- CN-A- 116 505 668
- US-A- 3 866 718
- US-A1- 20240 117 793
- VEROPE: "APPROPRIATEHANDLING OF VEROPE SPECIAL WIRE ROPES", INTERNET CITATION, 30 April 2019 (2019-04-30), pages 1 - 32, XP002806701, Retrieved from the Internet <URL:https://verope.com/wp-content/uploads/2019/03/190305_Gebrauchsanweisung_verope_COVER_EN.pdf> [retrieved on 20220603]

## Beschreibung

Die vorliegende Erfindung betrifft ein Hubspeicherwerk zur Speicherung und Rückspeisung elektrischer Energie, insbesondere zur Verwendung in Stromnetzen mit hohem Anteil regenerativer Energiequellen wie Photovoltaik- und Windkraftanlagen. Das Hubspeicherwerk dient der Netzlastanpassung sowie der Bereitstellung einer schnellen, regelbaren Momentanreserve.

Mit dem geplanten Rückbau konventioneller thermischer Kraftwerke entfällt zunehmend die Bereitstellung von Momentanreserve durch synchronisierte Turbogeneratoren, die über das Wechselstromnetz elektromagnetisch gekoppelt waren. Diese Maschinen waren in der Lage, plötzliche Belastungsänderungen ohne zusätzliche Steuerungseingriffe nahezu verzögerungsfrei auszugleichen und somit zur Stabilität des Stromnetzes beizutragen. Derartige Eigenschaften fehlen Photovoltaik- und Windkraftanlagen, da diese ausschließlich ihre jeweils aktuell verfügbare Leistung einspeisen und keine system relevanten Pufferkapazitäten besitzen. Gasturbinen hingegen weisen eine zeitliche Verzögerung von mehreren Minuten auf, bevor sie wirksam zur Netzstabilisierung beitragen können.

In Stromnetzen aller Spannungsebenen - von Orts- über Verteil- bis hin zu Transport- und Verbundnetzen - ist die Einhaltung der Netzfrequenz von zentraler Bedeutung für die Versorgungssicherheit. Bei ausbleibender Frequenzanpassung innerhalb kürzester Zeit schalten sich überlastete Netzsegmente automatisch ab, was zu Versorgungsausfällen führen kann. Aufgrund des steigenden Anteils erneuerbarer Energien und des damit einhergehenden Wegfalls klassischer Momentanreserve fehlt es zunehmend an technischen Mitteln, die schnell genug auf Netzfrequenzabweichungen reagieren können.

Zur kurzfristigen Überbrückung von Energieschwankungen werden Batteriespeichersysteme eingesetzt. Diese unterliegen jedoch einer technisch bedingten Begrenzung ihrer Lade- und Entladezyklen, wodurch sich ihre Lebensdauer bei häufiger Nutzung signifikant verkürzt. Insbesondere im Bereich der Netzstabilisierung, bei dem häufige Ladezyklen erforderlich sind, stellt dies eine erhebliche Einschränkung dar.

Ein mechanisches Energiespeichersystem zur Pufferung elektrischer Energie ist aus WO 2024/002512 A1 bekannt. Dieses beschreibt ein Hubspeicherwerk, das aus einer Vielzahl einzeln ansteuerbarer Hubmodule besteht. Jedes Hubmodul weist eine elektrisch betriebene Seilwinde sowie ein daran aufgehängtes, vertikal bewegliches Hubgewicht auf. Die Speicherung der Energie erfolgt durch Anheben des Gewichts, wobei elektrische Energie in potenzielle Energie bzw. Lageenergie umgewandelt wird. Bei Bedarf kann das Hubgewicht abgesenkt werden, wodurch die gespeicherte Lageenergie in elektrische Energie zurückgewandelt und ins Netz eingespeist wird. Die Steuerung der einzelnen Hubmodule sowie die Koordination mit dem Stromnetz erfolgt durch eine zentrale Steuerungs- und Regelungseinheit, die sowohl Stromleitungen zur Energieübertragung als auch Daten- und Steuerungsleitungen zur Kommunikation umfasst. Zudem sind dem System regenerative Energiequellen wie Photovoltaik- oder Windkraftanlagen zugeordnet, aus denen Energie ebenfalls in das Energiespeichersystem eingespeist werden kann.

Weiterer Stand der Technik wird gebildet durch: US 2024/117793 A1; CN 115 490 178 A; US 3 866 718 A; CN 116 505 666 A; CN 116 505 668 A; WO 2008/135043 A2.

Die Aufgabe der Erfindung besteht darin, ein mechanisches Energiespeichersystem zur temporären Speicherung und Rückgewinnung elektrischer Energie bereitzustellen, das eine besonders schnelle Reaktionsfähigkeit auf Netzlaständerungen ermöglicht. Es soll eine netzdienliche Betriebsweise unterstützt werden, bei der elektrische Energie bedarfsgerecht gespeichert und rückgespeist werden kann, um eine stabile Netzfrequenz zu gewährleisten. Dabei soll insbesondere den Anforderungen moderner Stromnetze mit hohem Anteil dezentral einspeisender, regenerativer Energiequellen Rechnung getragen werden.

Darüber hinaus besteht die Aufgabe darin, ein Speichersystem bereitzustellen, das sich durch eine hohe Betriebszuverlässigkeit, geringe mechanische Belastung und eine effiziente Energiewandlung auszeichnet. Ziel ist es auch, die Energieumwandlung unabhängig von thermischen Verzögerungen oder Ladezyklenbeschränkungen herkömmlicher Speichertechnologien zu realisieren. Die Lösung soll dabei gleichermaßen für die Einspeisung von Strom aus externen Netzen wie auch aus lokal erzeugter erneuerbarer Energie geeignet sein und dabei flexibel steuerbar bleiben.

Diese Aufgabe wird durch ein Hubspeicherwerk nach Anspruch 1 gelöst. Zweckmäßige Weiterbildungen der Erfindung sind in den Ansprüchen 2 bis 10 aufgeführt.

Das erfindungsgemäße Hubspeicherwerk baut auf dem aus WO 2024/002512 A1 bekannten Grundaufbau auf. In dieser Hinsicht wird Bezug genommen auf die internationale Patentanmeldung mit der Anmeldenummer PCT/EP2023/000034 sowie die dazugehörige Veröffentlichung mit der internationalen Veröffentlichungsnummer WO 2024/002512 A1.

Das erfindungsgemäße Hubspeicherwerk dient der Speicherung und Rückspeisung elektrischer Energie und der Netzlastanpassung in einem mit dem Hubspeicherwerk verbundenen Stromnetz eines Stromnetzverbunds oder eines autarken Stromversorgungssystems. Das Hubspeicherwerk umfasst eine Vielzahl einzelansteuerbarer Hubmodule sowie eine mit dem Stromnetz verbundene zentrale Steuerungs- und Regelungseinheit. Jedes der Hubmodule weist eine Seilwinde mit mindestens einem Windenseil und mit einem im Motor- und Generatorbetrieb betreibbaren, als Elektromotor ausgebildeten Windenmotor auf. Weiterhin umfasst jedes Hubmodul ein am Windenseil aufgehängtes Hubgewicht zur Speicherung von Energie in Form von Lageenergie des Hubgewichts durch Anheben des Hubgewichts mittels der Seilwinde sowie zur Nutzung der gespeicherten Lageenergie durch Absenken des Hubgewichts mittels der Seilwinde. Darüber hinaus ist jedes Hubmodul mit einem Führungssystem zur Führung des Hubgewichts beim Anheben oder Absenken des Hubgewichts sowie mit einer - im Regelfall in einem Steuerschrank installierten - Elektronikeinheit zur Steuerung des Windenmotors und zur Stromkonvertierung ausgestattet. Die Elektronikeinheit bzw. der Steuerschrank mit der Elektronikeinheit kann räumlich auch entfernt von der Seilwinde im Hubspeicherwerk verortet sein. Das Hubgewicht ist durch das Führungssystem im Regelfall vertikal geführt.

Das Hubspeicherwerk umfasst gewöhnlich ein Bauwerk, zum Beispiel ein Gebäude, in dem die Hubmodule untergebracht sind.

Die Elektronikeinheit und der Windenmotor der Seilwinde jedes der Hubmodule sind jeweils über Stromleitungen sowie über Daten- und Steuerleitungen mit der zentralen Steuerungs- und Regelungseinheit verbunden. Das Hubspeicherwerk ist derart ausgebildet, dass elektrische Energie aus dem Stromnetz durch mittels der zentralen Steuerungs- und Regelungseinheit individuell gesteuertes Anheben der Hubgewichte in Lageenergie der Hubgewichte gewandelt werden kann und die gespeicherte Lageenergie der Hubgewichte durch individuell gesteuertes Absenken der Hubgewichte in elektrische Energie rückgewandelt werden kann.

Die Seilwinde jedes der Hubmodule ist erfindungsgemäß eine bodenseitig im jeweiligen Hubmodul angeordnete, zwei der Windenseile aufweisende Doppel-Seilwinde, d. h. eine Seilwinde, auf deren Trommel die zwei Windenseile synchron auf- bzw. abgewickelt werden. Die beiden Windenseile sind hierbei in parallel nebeneinander angeordneten Einlagenwicklungen auf der Doppel-Seilwinde gewickelt, d. h., die Windenseile sind - bei vollständiger Aufwicklung - jeweils nur einlagig aufgewickelt. Vorzugsweise sind die beiden parallelen Einlagenwicklungen spiegelsymmetrisch gewickelt.

Das Hubgewicht des jeweiligen Hubmoduls ist an den beiden Windenseilen, die an zwei voneinander beabstandeten Aufhängungspunkten am Hubgewicht befestigt sind, aufgehängt. Das Führungssystem zur Führung des Hubgewichts beinhaltet die beiden Windenseile und für jedes der beiden Windenseile jeweils eine Seilführung, die das jeweilige Windenseil deckenseitig, d. h. oberhalb des Hubgewichts, im Hubmodul umlenkt. Die jeweilige Seilführung zur Umlenkung des jeweiligen Windenseils umfasst eine deckenseitig im jeweiligen Hubmodul angeordnete erste Umlenkrolle in Form einer festen Seilrolle. Das jeweilige Windenseil bildet einen ersten Seilabschnitt zwischen der Seilwinde und der ersten Umlenkrolle und einen gegenläufigen zweiten Seilabschnitt zwischen der ersten Umlenkrolle und dem Aufhängungspunkt am Hubgewicht. Die zweiten Seilabschnitte der beiden Windenseile sind vorzugsweise parallel zueinander, insbesondere lotrecht, geführt. Durch die erste Umlenkrolle, die im Hubmodul deckenseitig, d. h. oberhalb des Hubgewichts, angeordnet ist, kann das Hubgewicht von der bodenseitig installierten Seilwinde über die erste Umlenkrolle auf eine maximale Hubhöhe nahe dieser ersten Umlenkrolle gehoben werden.

Das Führungssystem kann neben den Windenseilen und der Seilführung zum Beispiel auch Schienen oder andere Führungsmechanismen zur präzisen und sicheren Bewegung des Hubgewichts umfassen. Vorzugsweise beschränkt sich das Führungssystem jedoch auf die Windenseile und die Seilführung, d. h., das Hubgewicht hängt frei an den beiden Windenseilen und ist durch die beiden Windenseile geführt.

Die elektrische Energie zum Heben der Hubgewichte bezieht Strom insbesondere aus dem als Energiequelle dienenden angeschlossenen Stromnetz, insbesondere bei Überstromkapazität im angeschlossenen Stromnetz. Daneben kann das Hubspeicherwerk an weitere Energiequellen, zum Beispiel auf, an oder in der Nähe des Bauwerks des Hubspeicherwerks befindliche regenerative Elektroenergieerzeuger, angeschlossen sein. Solche lokal installierten regenerativen Elektroenergieerzeuger können unter anderem Photovoltaikanlagen zur Solarstromerzeugung oder Windkraftanlagen zur Windstromerzeugung sein. Zudem kann das Hubspeicherwerk auch ein Biomassekraftwerk als regenerativen Elektroenergieerzeuger als Energiequelle umfassen bzw. an ein solches angeschlossen sein. Die regenerativen Elektroenergieerzeuger können regenerativ erzeugte Elektroenergie wahlweise in Form von Gleichstrom oder Wechselstrom bereitzustellen.

Die Steuerungs- und Regelungseinheit ist so programmiert, dass sie die Speicherung von überschüssigem Strom aus dem Stromnetz oder von Strom aus den anderen Energiequellen, zum Beispiel aus regenerativen Elektroenergieerzeugern, in Form von Lageenergie bzw. potenzieller Energie der Hubgewichte in den einzelnen Hubmodulen steuert. Die Steuerungs- und Regelungseinheit ist üblicherweise computergestützt und fernsteuerbar ausgeführt, sodass zum Beispiel der Stromnetzbetreiber - insbesondere zum Zweck der Netzlastregelung - über die Steuerungs- und Regelungseinheit die Stromeinspeisung aus dem Stromnetz in das Hubspeicherwerk bzw. die Stromeinspeisung aus dem Hubspeicherwerk in das Stromnetz steuern kann.

Die Steuerungs- und Regelungseinheit umfasst zudem regelmäßig eine Speichereinheit, über die erfasst werden kann, in welchem Hubmodul welche elektrische Energie aus welcher Energiequelle eingespeist wurde. Dies ermöglicht eine Zuordnung der gespeicherten Lageenergie bzw. potenziellen Energie der Hubgewichte zur ursprünglichen Energiequelle, d. h. eine sortenreine Speicherung der Energie. Bei Einspeisung der Lageenergie in das Stromnetz kann dem eingespeisten Strom so die ursprüngliche Energiequelle zugeordnet werden.

Die Einspeisung der in den Hubmodulen gespeicherten Lageenergie in das Stromnetz kann in kleinteiligen, modulierbaren Einspeisemengen erfolgen. Dies ermöglicht eine flexible Regelung der Netzlast. Die fragmentierbare, sekundenschnell abrufbare Strommengeneinspeisung ermöglicht eine effiziente Netzlastanpassung bzw. Netzlastregelung. Das beschriebene Hubspeicherwerk trägt - als schnell steuerbarer Energiepuffer - so dazu bei, in Stromnetzen mit dezentralisierten Energiequellen die Netzstabilität des angeschlossenen Stromnetzes sicherzustellen.

Die Hubmodule sind regelmäßig so konzipiert, dass sie ohne zusätzliche Hilfsenergie startfähig sind und ihr Ladezustand bei Nichtnutzung erhalten bleibt.

Die Elektronikeinheit jedes Hubmoduls regelt durch Verbindung über die Steuerungs- und Regelungseinheit die Wechselwirkung mit dem Stromnetz. Jedes Hubmodul, d. h. dessen Elektronikeinheit und dessen Windenmotor, ist mittels der oder mehrerer der Stromleitungen an die zentrale Steuerungs- und Regelungseinheit angeschlossen; die zentrale Steuerungs- und Regelungseinheit bindet das Hubspeicherwerk wiederum an das Stromnetz an. Zudem ist die Steuerungs- und Regelungseinheit zur Steuerung und Regelung der Energiespeicherung in den Hubmodulen bzw. der Energieabnahme aus den Hubmodulen mittels jeweils einer der Daten- und Steuerleitungen mit jedem der Hubmodule verbunden.

Die modulare Bauweise des Hubspeicherwerks bietet erhebliche Vorteile hinsichtlich Skalierbarkeit, Wartung und Anpassungsfähigkeit. Durch die Vielzahl einzelansteuerbarer Hubmodule lässt sich das Hubspeicherwerk flexibel an unterschiedliche Leistungsanforderungen anpassen, indem je nach Bedarf Hubmodule zu- oder abgeschaltet werden. Dies ermöglicht eine schrittweise Erweiterung der Speicherkapazität ohne grundlegende Umbaumaßnahmen am Gesamtsystem. Zudem erlaubt die modulare Struktur eine gezielte Wartung oder den Austausch einzelner Hubmodule, ohne den Betrieb des gesamten Hubspeicherwerks unterbrechen zu müssen. Diese Dezentralisierung der Funktionseinheiten erhöht die Systemverfügbarkeit und Betriebssicherheit erheblich. Darüber hinaus begünstigt sie eine optimierte Raumausnutzung im Bauwerk.

Die Doppel-Seilwinde mit der Einlagenwicklung ermöglicht höhere Hubgeschwindigkeiten als andere Windenbauarten und trägt somit dazu bei, mittels des Hubmoduls elektrische Energie sehr schnell in Lageenergie zu wandeln (bzw. umgekehrt Lageenergie in elektrische Energie). Die Einlagenwicklung verringert zudem die Reibung und den Seilverschleiß, der bei Mehrlagenwicklung verstärkt auftritt. Da die Hubmodule im regulären Betrieb des Hubspeicherwerks üblicherweise kontinuierlich aktiv sind und die Hubgewichte dabei häufig auf- und abbewegt werden, kommt einer geringen Reibung sowie einem minimalen Seilverschleiß besondere Bedeutung zu. Diese Faktoren sind entscheidend für einen hohen mechanischen Wirkungsgrad, der die erfindungsgemäße Ausführung der Seilwinde kennzeichnet, und tragen zugleich zu einer langen, wartungsarmen Betriebsdauer der Hubmodule bei.

Die Aufhängung des Hubgewichts durch die beiden Windenseile fixiert die Lage des Hubgewichts besser als bei Aufhängung mit nur einem Seil. Zudem verteilt sich die Kraftaufnahme auf beide Windenseile. Die doppelte Seilaufhängung gewährleistet ferner eine Fehlertoleranz bzw. Redundanz bei mechanischer Beeinträchtigung eines der Windenseile.

Einer der Vorteile der bodenseitigen Anordnung der Seilwinde (am Boden des Hubmoduls bzw. des Bauwerks) in Verbindung mit der deckenseitigen Umlenkung der Windenseile besteht darin, dass die von den Seilwinden ausgehenden Betriebsschwingungen in den Boden abgeleitet werden können und sich nicht bzw. nur in geringem Maße auf die Bauwerkkonstruktion übertragen. Die grundsätzlich mögliche Anordnung der Seilwinden im Deckenbereich bzw. oberhalb des Hubgewichts kann dagegen zu unerwünschten Schwingungen - vor allem aufgrund der Vielzahl der Hubmodule im Hubspeicherwerk - in der tragenden Konstruktion führen.

Unabhängig vom Lastmanagement, ob große Strommengen eingespeist oder entnommen werden, bleibt die Wandlungseffizienz im Hubspeicherwerk nahezu gleich. Dieser flexible Leistungsbereich ist über die Geschwindigkeit und die Anzahl der Hubmodule einstellbar.

Zur Stromkonvertierung umfasst die Elektronikeinheit typischerweise einen oder mehrere Wechselrichter. Dies ermöglicht die Nutzung von Gleichstrom (zum Beispiel aus Energiequellen wie der Photovoltaik) ebenso wie von überschüssigem Wechselstrom aus dem Stromnetz.

Das Hubgewicht kann bedarfsgerecht ausgeführt sein, zum Beispiel aus Beton (ca. 2,4 t/m³), aus Eisen (ca. 7,8 t/m³) oder aus einem mit Wasser (ca. 1 t/m³) gefüllten Behälter. Vorzugsweise umfasst das Hubgewicht mehrere Ballastkörper, die insbesondere übereinander stapelbar und zum Beispiel an einem zentralen Gestänge des Hubgewichts in bedarfsgerechter Anzahl aufgenommen oder einzeln durch geeignete Verbindungselemente miteinander verbunden sind.

Gemäß einer Ausgestaltung kann das erfindungsgemäße Hubspeicherwerk durch eine umweltfreundliche Konstruktion aus recyclefähigen Bau- und Werkstoffen realisiert sein.

Als Windenseile können Stahl- oder Kunststoffseile zum Einsatz kommen. Insbesondere Kunststoffseile, zum Beispiel aus Polyethylen, Polyester oder Polyamid, haben sich aufgrund der geringeren Masse und der geringeren Reibung als geeignet erwiesen. Besonders bevorzugt für die vorliegende Anwendung sind Seile aus ultrahochmolekularem Polyethylen (UHMWPE); sie zeichnen sich durch extrem hohe Zugfestigkeit, eine geringe Lastdehnung, geringe Masse, Abriebfestigkeit und Langlebigkeit aus. Der Durchmesser des Windenseils liegt typischerweise im Bereich von 25 mm ± 5 mm.

Die jeweilige Seilführung kann zudem eine zweite Umlenkrolle in Form einer losen Rolle aufweisen, wobei das Hubgewicht an der zweiten Umlenkrolle befestigt ist, um die Hubkräfte zu verkleinern. D. h., die zweite Umlenkrolle ist am jeweiligen Aufhängungspunkt des Hubgewichts angebracht. Das jeweilige Windenseil bildet - neben dem ersten Seilabschnitt und dem zweiten Seilabschnitt - einen dritten Seilabschnitt, der sich vom Aufhängungspunkt des Hubgewichts bzw. der zweiten Umlenkrolle zu einem deckenseitig im Hubmodul angeordneten Befestigungspunkt des Windenseils erstreckt. Durch die doppelte Seilführung mit den beiden Umlenkrollen, d. h. der ersten und der zweiten Umlenkrolle, wird die notwendige Zugkraft am Windenseil, d. h. die Kraft, die die Seilwinde zum Anheben des Hubgewichts aufbringen muss, gegenüber der Ausführung mit nur einfach umgelenktem Windenseil geviertelt. Die erste und die zweite Umlenkrolle können in Erweiterung dieser Ausführung auch Teil eines Flaschenzugs sein.

Das Hubspeicherwerk gemäß dem beschriebenen Basisaufbau kann zudem ein Kühlsystem umfassen, vorzugsweise ein Kühlsystem mit einem geschlossenen Kühlmittelkreislauf, in dem ein Kühlmittel, zum Beispiel Öl oder Wasser, im Kreislauf zwischen einer Wärmesenke und einer oder mehreren Wärmequellen geführt wird bzw. zirkuliert. Die Wärmequellen sind hierbei die Windenmotoren und/oder die Elektronikeinheiten der Hubmodule, die bei Geschwindigkeitsregelung im Minutentakt regelmäßig hoch beansprucht werden. Zur Kühlung der Windenmotoren und/oder der Elektronikeinheiten der Hubmodule ist jeweils ein in den Kühlmittelkreislauf eingebundenes Kühlaggregat vorgesehen. Das Kühlaggregat ist in den jeweiligen Windenmotor oder die Elektronikeinheit integriert oder an der jeweiligen Komponente zur Kühlung derselben angebracht. Hierbei kann es sich zum Beispiel um Kühlschlangen, Wärmetauscher oder ähnliche Durchflusskühler handeln. Mittels des Kühlsystems wird die durch Bewegung der Windenmotoren und durch Beanspruchung der Elektronikeinheiten (vor allem bei Stromkonvertierung mittels der Wechselrichter) entstehende Wärmeenergie von diesen entsprechenden Bauteilen der Hubmodule abgeführt und über den Kühlmittelkreislauf zur Wärmesenke transportiert. Das Kühlsystem fasst mithin die Wärme bzw. Abwärme aus den Wärmequellen zusammen. Die Wärmesenke des Kühlsystems kann zum Beispiel ein in den Kühlmittelkreislauf eingebundener zentraler Wärmeübertrager (Wärmetauscher) sein, der die überschüssige Wärme aus dem Kühlsystem abgibt.

Vorzugsweise ist der zentrale Wärmeübertrager eine Fernwärmeübergabestation, d. h., ein Wärmetauscher, mittels dessen die überschüssige Abwärme in ein Fernwärmenetz zur weiteren Nutzung abgegeben wird. Das Kühlsystem kann als Wärmesenke auch oder zusätzlich einen Wasser-Luft-Wärmeübertrager aufweisen, mittels dessen die Abwärme an die Umgebung abgegeben wird, zum Beispiel wenn im Sommer kein Wärmebedarf an Fernwärme besteht und die Kühlung der in den Kühlmittelkreislauf eingebundenen, zu kühlenden Komponenten zu deren Temperaturabsenkung erforderlich ist. Da die Hubmodule bei herkömmlichem Betrieb des Hubspeicherwerks zwecks Netzanpassung im Regelfall stets im Betrieb sind, also die Hubgewichte häufig auf- und abbewegt werden, entsteht durch den Betrieb der Windenmotoren und durch die Beanspruchung der Elektronikeinheiten stets ein gewisses Maß an Abwärme im Kühlsystem, die vorzugsweise als Fernwärme zu Heizzwecken genutzt wird.

Es kann ferner vorgesehen sein, dass - bei Ausstattung der Elektronikeinheiten mit Wechselrichtern zur Stromkonvertierung - jeder der Wechselrichter zur Aufnahme und Bereitstellung von Blindstrom ausgebildet ist, wobei die zentrale Steuerungs- und Regelungseinheit eingerichtet ist, die Wechselrichter der Hubmodule zur Blindstromkompensation im Stromnetz zu steuern. Dies ermöglicht es, die Wechselrichter der Elektronikeinheiten zu nutzen, um netzdienlich den Blindstrom im Stromnetz nach momentanen Bedarf zu kompensieren. Das ist insofern wichtig, da die Wechselrichter eine neue Art der Momentanreserve bzw. deren Ersatz darstellen. Die Blindstromkompensation mit Wechselrichtern ist eine effiziente Methode, um die Netzqualität zu verbessern und Belastungen durch Blindleistung zu minimieren. Die gezielte Bereitstellung oder Aufnahme von Blindleistung mittels Wechselrichtern erfolgt durch die Steuerung des Phasenwinkels zwischen Strom und Spannung, wodurch der Blindstrom in das Stromnetz eingespeist oder aus diesem entnommen wird.

Induktive Blindleistung, die häufig durch Geräte wie Elektromotoren oder Transformatoren verursacht wird, kann durch den Wechselrichter durch Erzeugung kapazitiver Blindleistung kompensiert werden. Umgekehrt kann kapazitive Blindleistung, etwa durch lange Kabelstrecken, durch induktive Blindleistung des Wechselrichters ausgeglichen werden. Dies wird durch präzise Pulsbreitenmodulation und entsprechende Steueralgorithmen erreicht, die den Wechselrichter in die Lage versetzen, dynamisch auf Schwankungen im Netz zu reagieren.

Ein entscheidender Vorteil der Blindstromkompensation mittels des Hubspeicherwerks liegt in der Vielzahl der Wechselrichter (da üblicherweise jedes Hubmodul mindestens einen Wechselrichter in der Elektronikeinheit umfasst). Durch die zentrale Steuerung der Hubmodule (einschließlich der Wechselrichter) mittels der zentralen Steuerungs- und Regelungseinheit ist eine bedarfsgerechte Bereitstellung von Wirkleistung und Blindleistung zur Netzstabilisierung ermöglicht. Besonders in modernen Energienetzen, die von dezentraler Erzeugung geprägt sind, trägt diese Funktion dazu bei, die Übertragungsverluste zu reduzieren und die Kapazität bestehender Infrastruktur optimal zu nutzen. Darüber hinaus können die Wechselrichter (über die zentrale Steuerungs- und Regelungseinheit) durch Kommunikationsprotokolle direkt mit Netzleitsystemen interagieren, um dynamische Blindleistungssollwerte zu erhalten und im Einklang mit Netzanforderungen zu arbeiten.

Die Erfindung ist nachfolgend anhand eines Ausführungsbeispiels und mit Bezug auf die schematischen Zeichnungen näher erläutert, wobei gleiche oder ähnliche Merkmale mit gleichen Bezugszeichen versehen sind; dazu zeigen:
- Fig. 1:: ein Hubspeicherwerk gemäß dem Stand der Technik in perspektivischer Ansicht;
- Fig. 2:: das Hubmodul mit Doppel-Seilwinde gemäß einer Ausführung mit monolithischem Hubgewicht in schematisierter Darstellung;
- Fig. 3:: das Hubmodul mit Doppel-Seilwinde gemäß einer Ausführung mit einem Hubgewicht aus 10 Ballastkörpern aus Beton in Seitenansicht;
- Fig. 4:: das Hubmodul mit Doppel-Seilwinde gemäß einer Ausführung mit einem Hubgewicht aus 10 Ballastkörpern aus Grauguss in Seitenansicht;
- Fig. 5:: das Hubmodul mit Doppel-Seilwinde gemäß einer Ausführung mit einem Hubgewicht aus 10 Ballastkörpern aus Beton in Frontansicht;
- Fig. 6:: das Hubmodul mit Doppel-Seilwinde gemäß einer Ausführung mit einem Hubgewicht aus Ballastkörpern aus Beton in Horizontalschnittansicht von oben;
- Fig. 7:: zwei Hubmodule mit Doppel-Seilwinde gemäß einer Ausführung mit einem Hubgewicht aus Ballastkörpern aus Beton in Horizontalschnittansicht von oben;
- Fig. 8:: die Installation der Doppel-Seilwinden zweier Hubmodule an einem Installationskanal in seitlicher Vertikalschnittansicht;
- Fig. 9:: die Installation von sechs Hubmodulen entlang eines Installationskanals in Horizontalschnittansicht von oben;
- Fig. 10:: eine Ausführung des Hubspeicherwerks mit einer Vielzahl von Hubmodulen in einer Horizontalschnittansicht und einer Vertikalschnittansicht.

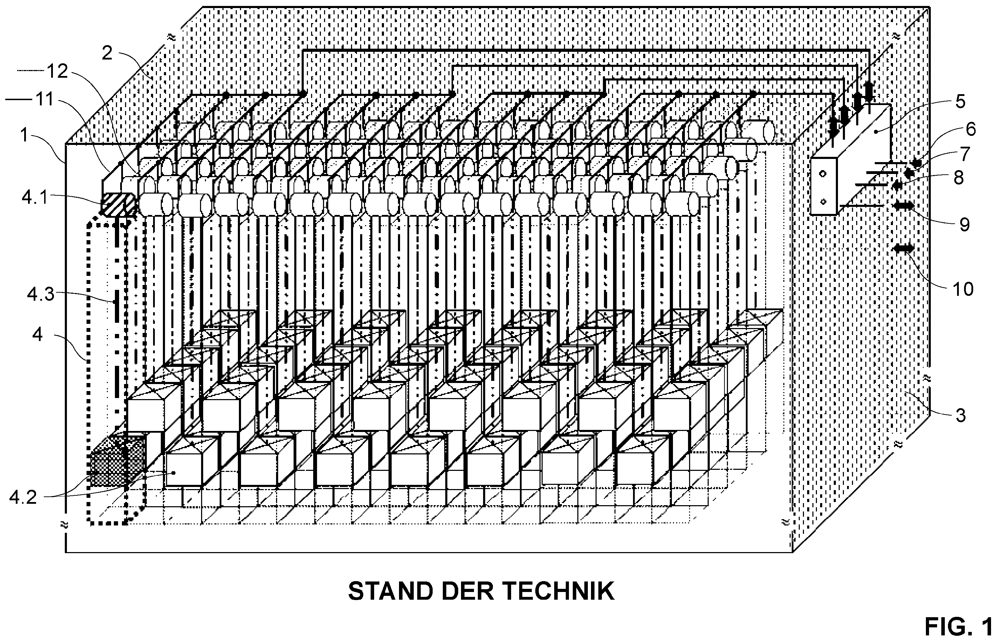

Der Basisaufbau des Hubspeicherwerks gemäß Fig. 1 entspricht der in WO 2024/002512 A1 offenbarten Anlage. Das Hubspeicherwerk umfasst das Bauwerk 1 mit einer Vielzahl der Hubmodule 4, die gemeinsam ein Hubspeichersystem bilden. Im Beispiel nach Fig. 1 befinden sich 80 Hubmodule 4 im Bauwerk 1. Die Hubmodule 4 sind jeweils mit einer der Stromleitungen 11 und einer der Daten- und Steuerleitungen 12 mit der Steuerungs- und Regelungseinheit 5 verbunden. Die Steuerungs- und Regelungseinheit 5 wiederum ist an das Stromnetz 9 gekoppelt, aus dem elektrische Energie im Hubspeicherwerk als Lageenergie der Hubmodule 4 gespeichert oder elektrische Energie aus dem Hubspeicherwerk in das Stromnetz 9 eingespeist werden kann - je nach Bedarf im Stromnetz 9, insbesondere jedoch zur Regelung der Netzstabilität. An die Steuerungs- und Regelungseinheit 5 sind ferner diverse regenerative Energiequellen bzw. Elektroenergieerzeuger angeschlossen, nämlich eine Photovoltaikanlage 6, eine Windkraftanlage 7 und/oder ein Biomassekraftwerk 8, über die ebenfalls elektrische Energie zur Speicherung im Hubspeicherwerk bereitgestellt wird. Die Photovoltaikanlage 6 ist vorzugsweise auf dem Dach 2 und/oder an der Südseite 3 des Bauwerks 1 installiert. Zur ortsungebundenen Steuerung des Hubspeicherwerks ist dessen Steuerungs- und Regelungseinheit 5 mit einer Fernsteuerung 10 versehen. Im Ausführungsbeispiel gemäß dem Stand der Technik verfügt jedes der Hubmodule 4 über die deckenseitig installierte Seilwinde 4.1 und das mittels eines einzelnen Windenseils 4.3 an der Seilwinde 4.1 befestigte Hubgewicht 4.2. Die deckenseitige Installation der Seilwinden 4.1 und die Nutzung nur eines Windenseils 4.3 zur Befestigung des Hubgewichts 4.2 des in Fig. 1 dargestellten Hubspeicherwerks gemäß dem Stand der Technik unterscheidet dies vom erfindungsgemäßen Hubspeicherwerk, im Basisaufbau entsprechen sich diese jedoch weitestgehend.

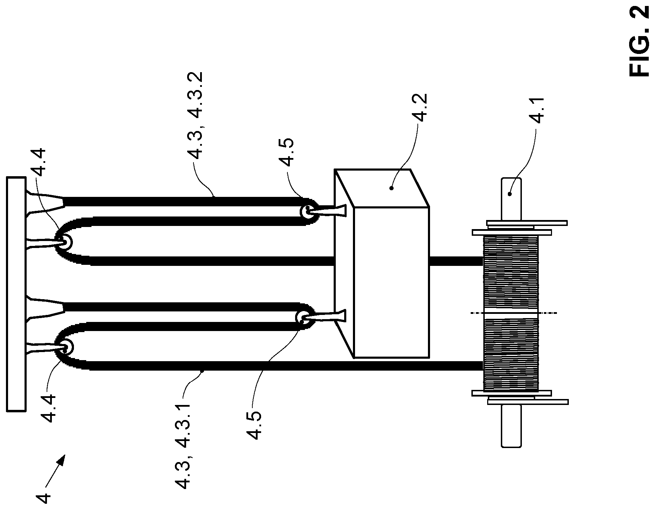

In Fig. 2 ist eine Ausführung des Hubmoduls 4 des vorgeschlagenen Hubspeicherwerks dargestellt. Das Hubmodul 4 weist die als Doppel-Seilwinde ausgeführte Seilwinde 4.1 mit dem ersten Windenseil 4.3.1 und dem zweiten Windenseil 4.3.2 auf, die jeweils einlagig auf die Trommel der Seilwinde 4.1 gewickelt sind. Das Hubgewicht 4.2 ist an beiden Windenseilen 4.3, 4.3.1, 4.3.2 befestigt. Jedes der beiden Windenseile 4.3, 4.3.1, 4.3.2 ist über eine separate Seilführung, die jeweils die erste Umlenkrolle 4.4 und die zweite Umlenkrolle 4.5 umfasst, geführt. Die erste Umlenkrolle 4.4 der jeweiligen Seilführung ist als feste Seilrolle ausgebildet, die im Deckenbereich des Hubmoduls 4 befestigt ist. Die zweite Umlenkrolle 4.5 ist jeweils eine lose Seilrolle. Das Hubgewicht 4.2 ist mit der zweiten Umlenkrolle 4.5 der Seilführung des ersten Windenseils 4.3.1 und mit der zweiten Umlenkrolle 4.5 der Seilführung des zweiten Windenseils 4.3.2 verbunden, wodurch das Hubgewicht 4.2 an zwei Aufhängungspunkten befestigt hängt.

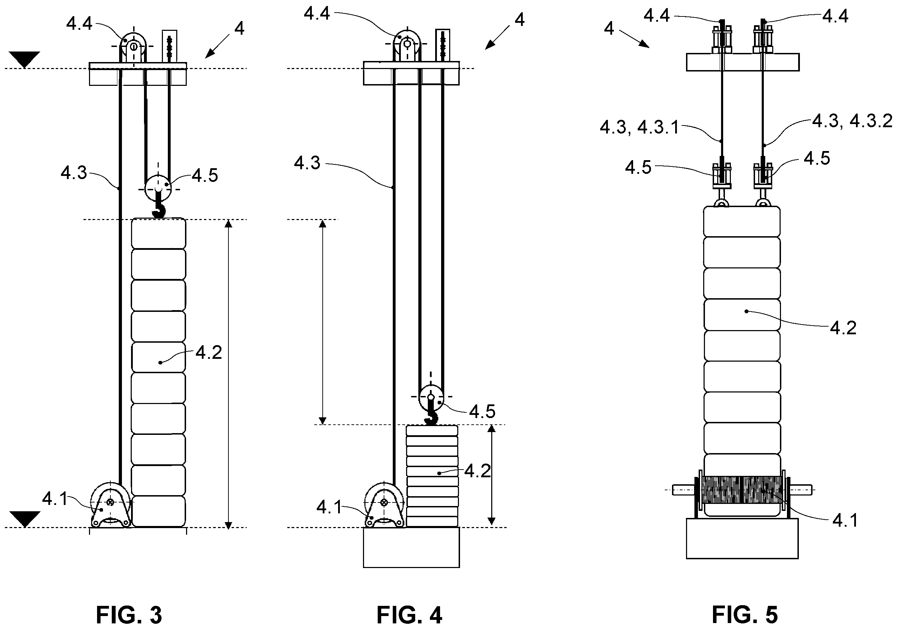

Die Ausführungen des Hubmoduls 4 gemäß Fig. 3 und Fig. 4 veranschaulichen in Seitenansicht die Führung der Windenseile 4.3, wobei nur eines der Windenseile 4.3 sichtbar und das andere verdeckt ist: Der erste Seilabschnitt des jeweiligen Windenseils 4.3 verläuft von der bodenseitig installierten Seilwinde 4.1 zur ersten Umlenkrolle 4.4 (feste Seilrolle), der zweite Seilabschnitt des jeweiligen Windenseils 4.3 von der deckenseitig installierten ersten Umlenkrolle 4.4 zu der am Aufhängungspunkt des Hubgewichts 4.2 mittels eines Hakens befestigten zweiten Umlenkrolle 4.5 (lose Seilrolle) und der dritte Seilabschnitt des jeweiligen Windenseils 4.3 von der zweiten Umlenkrolle 4.5 zum deckenseitigen Befestigungspunkt, an dem das Ende des jeweiligen Windenseils 4.3 fixiert ist. Das Hubgewicht 4.2 umfasst mehrere, übereinandergestapelte und miteinander verbundene Ballastkörper. In der Ausführung des Hubmoduls 4 gemäß der Fig. 3 sind diese aus Beton gefertigt und in der Ausführung des Hubmoduls 4 gemäß der Fig. 4 aus Grauguss bzw. Eisenwerkstoffen hergestellt. Aufgrund der geringeren Höhe, die das Hubgewicht 4.2 aus Grauguss-Ballastkörpern einnimmt, kann der maximale Hub des Hubgewichts 4.2 mit Grauguss-Ballastkörpern signifikant erhöht werden. Die Speicherkapazität der Hubmodule 4 mit Grauguss-Ballastkörpern liegt etwa 15 % über der Speicherkapazität der Hubmodule 4 mit Beton-Ballastkörpern.

Die in den Ausführungen des Hubmoduls 4 gemäß Fig. 3 und Fig. 4 dargestellten, die gestapelten Ballastkörper umfassenden Hubgewichte 4.2 bieten einen Vorteil bei Montage und Demontage des jeweiligen Hubgewichts 4.2. Bei gängiger Ausführung der Hubmodule 4 beträgt die Masse des Hubgewichts 4.2 etwa 50 t. Die im Hubmodul 4 genutzte Doppel-Seilwinde weist einen Windenmotor mit einer Leistung von 250 kW auf. Eine Montage oder Demontage eines Hubgewichts 4.2 von 50 t bei monolithischer Ausbildung ist mit herkömmlicher mobiler Hebetechnik kaum möglich. Um letztere einsetzen zu können, sind die einzelnen Ballastkörper so konzipiert, dass deren Masse bei etwa 5 t liegt. Diese Ballastkörper können mit herkömmlicher mobiler Hebetechnik, zum Beispiel Gabelstaplern oder Hochhubwagen, transportiert werden. Vorteilhafterweise erfolgt die Montage des Hubgewichts 4.2 durch sukzessives Montieren der einzelnen Ballastkörper, wobei die bereits montierten Ballastkörper mit der Seilwinde 4.1 angehoben und der jeweils neu zu montierende Ballastkörper von unten an die bereits montierten Ballastkörper angebracht werden kann. Durch diese Methode kann das Hubgewicht 4.2 in Bodennähe montiert werden, ohne mit der mobilen Hebetechnik größere Hubhöhen realisieren zu müssen.

Die Ausführung des Hubmoduls 4 gemäß Fig. 5 entspricht der nach Fig. 3 und zeigt beide Windenseile 4.3, wobei für das erste Windenseil 4.3.1 und das zweite Windenseil 4.3.2 lediglich jeweils der zweite Seilabschnitt zwischen der ersten Umlenkrolle 4.4 und der zweiten Umlenkrolle 4.5 dargestellt ist; der erste Seilabschnitt zwischen Seilwinde 4.1 und der ersten Umlenkrolle 4.4 ist ausgeblendet. Die zweiten Seilabschnitte der beiden Windenseile 4.3, 4.3.1, 4.3.2 sind durch die Dimensionierung und Anordnung der ersten Umlenkrollen 4.4, der Aufhängungspunkte am Hubgewicht 4.2 und der zweiten Umlenkrollen 4.5 lotrecht und folglich parallel zueinander geführt. Hierdurch wird eine exakte Führung des Hubgewichts 4.2 beim Anheben und Absenken sichergestellt.

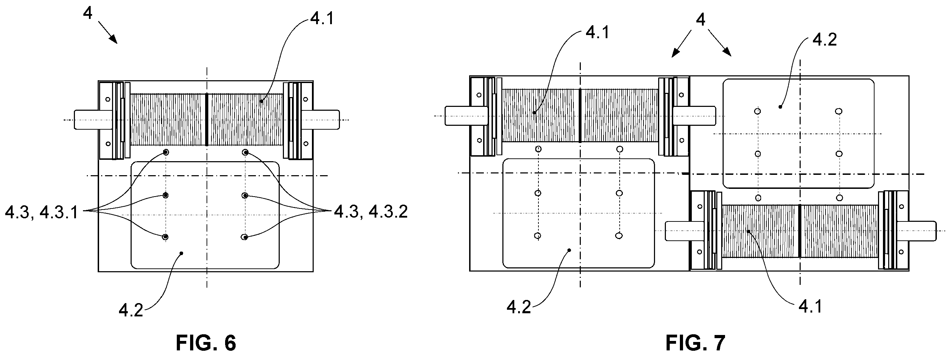

Die Ausführung des Hubmoduls 4 gemäß Fig. 6 entspricht wiederum der nach Fig. 3 und nach Fig. 5, wobei die Ansicht von oben auf die Seilwinde 4.1 und das Hubgewicht 4.2 aus einer Horizontalschnittebene erfolgt, die oberhalb der (nicht dargestellten) zweiten Umlenkrolle 4.5 und unterhalb der deckenseitigen Durchführungen unter der ersten Umlenkrolle 4.4 liegt. Die Schnitte durch die beiden Windenseile 4.3, 4.3.1, 4.3.2 zeigen jeweils den Querschnitt der Windenseile 4.3, 4.3.1, 4.3.2 im ersten Seilabschnitt (oben), im zweiten Seilabschnitt (mittig) und im dritten Seilabschnitt (unten). Wie ersichtlich, ist die Anordnung der zweiten und dritten Seilabschnitte so gewählt, dass die auf der Mittellinie des Hubgewichts 4.2 liegenden Aufhängungspunkte mittig zwischen dem zweiten und dritten Seilabschnitt liegen. Dadurch ist die verkippungsfreie Aufhängung des Hubgewichts 4.2 über die (nicht dargestellte) zweite Umlenkrolle 4.5 gewährleistet.

In Fig. 7 ist eine paarweise Anordnung zweier Hubmodule 4 gemäß der Ausführung nach den Fig. 3, 5 und 6 dargestellt. Durch die wechselweise bzw. drehsymmetrische Anordnung ist eine optimale Raumausnutzung ermöglicht.

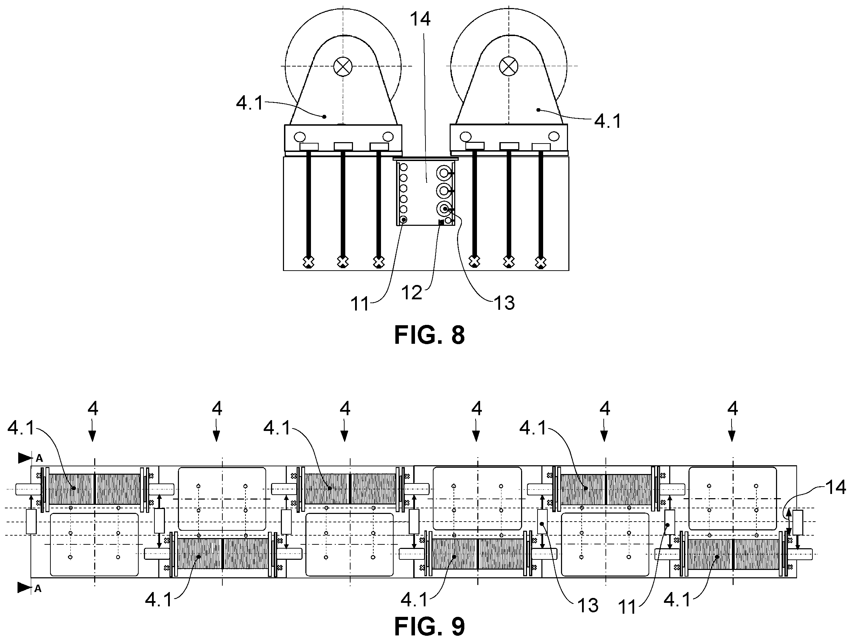

Fig. 8 zeigt zwei der Seilwinden 4.1, die gemäß der in Fig. 7 dargestellten Anordnung der Hubmodule 4 in einem Bodenfundament verankert sind. Zwischen beiden Seilwinden 4.1 bzw. den Hubmodulen 4, denen die Seilwinden 4.1 zugeordnet sind, verläuft ein Installationskanal 14, in dem die Stromleitungen 11, die Daten- und Steuerleitungen 12 und die Leitungen des Kühlmittelkreislaufs 13 verlaufen.

Eine Anordnung von sechs Hubmodulen 4, die abwechselnd unterschiedlich ausgerichtet sind, entlang des Installationskanals 14 ist in Fig. 9 dargestellt. Aus dem Installationskanal 14 zweigen die Stromleitungen 11 in Form von Elektroverteilern und die Leitungen des Kühlmittelkreislaufs 13 in Form von Kühlungsverteilern jeweils abwechselnd zu den Windenmotoren der Seilwinden 4.1 ab.

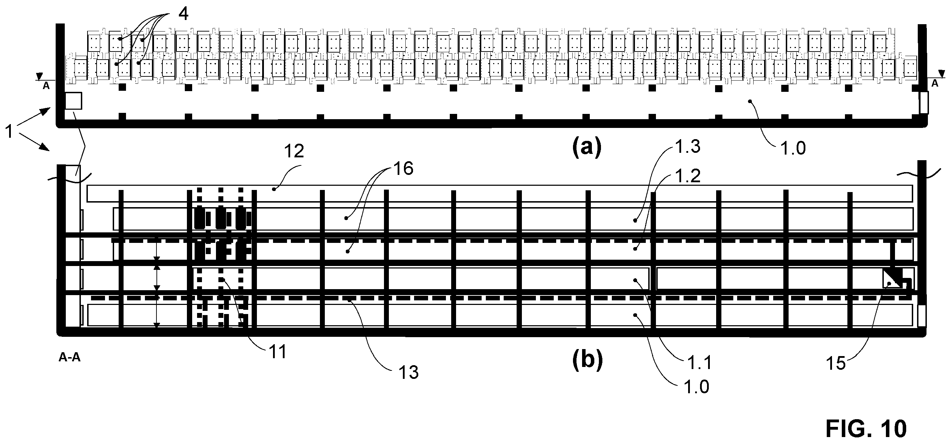

Eine Ausführung des erfindungsgemäßen Hubspeicherwerks ist in Fig. 10 in zwei Teilansichten dargestellt, nämlich in einem Horizontalschnitt gemäß Fig. 10 (a) und in einem Vertikalschnitt gemäß Fig. 10 (b); die Schnittebene A-A des Vertikalschnitts nach Fig. 10 (b) ist in Fig. 10 (a) angegeben. Der Horizontalschnitt der gemäß Fig. 10 (a) liegt in der untersten Etage 1.0, d. h. die Etage 0.

Das Bauwerk 1 des Hubspeicherwerks bildet ein vieretagiges, als Tragwerkkonstruktion errichtetes Gebäude. Die unterste Etage 1.0, d. h. die Etage 0, umfasst einen Service- und Transportgang neben den in Reihen aufgestellten Hubmodulen 4, deren Seilwinden 4.1 sich ebenfalls in der untersten Etage 1.0 - im Bodenfundament verankert - befinden. In der ersten Etage 1.1, d. h. der Etage 1, befinden sich die Räume für das Personal, zum Beispiel WCs, Umkleiden, Sozialräume und die Leitwarte. Zudem ist in der ersten Etage 1.1 der an ein Fernwärmenetz angeschlossene zentrale Wärmeübertrager 15 des Kühlsystems in Form von zwei Plattenwärmetauschern installiert. Die oberen Etagen 1.2, 1.3, d. h. die Etage 2 und die Etage 3, beinhalten die Schaltschränke 16 mit den Elektronikeinheiten der Hubmodule 4. Die Stromleitungen 11 und die Leitungen des Kühlmittelkreislaufs 13 verbinden die Komponenten des Hubspeicherwerks zur Ab- oder Zuführung elektrischer Energie bzw. zur Kühlung oder Abwärmenutzung.

### Bezugszeichenliste

- 1: Bauwerk
- 1.0: Etage 0
- 1.1: Etage 1
- 1.2: Etage 2
- 1.3: Etage 3
- 2: Dach
- 3: Südseite
- 4: Hubmodul
- 4.1: Seilwinde
- 4.2: Hubgewicht
- 4.3: Windenseil
- 4.3.1: erstes Windenseil
- 4.3.2: zweites Windenseil
- 4.4: erste Umlenkrolle
- 4.5: zweite Umlenkrolle
- 5: Steuerungs- und Regelungseinheit
- 6: Photovoltaikanlage
- 7: Windkraftanlage
- 8: Biomassekraftwerk
- 9: Stromnetz
- 10: Fernsteuerung
- 11: Stromleitung
- 12: Daten- und Steuerleitung
- 13: Kühlmittelkreislauf
- 14: Installationskanal
- 15: Wärmeübertrager
- 16: Schaltschränke

## Patentansprüche

1. Hubspeicherwerk zur Speicherung und Rückspeisung elektrischer Energie und zur Netzlastanpassung in einem mit dem Hubspeicherwerk verbundenen Stromnetz (9) eines Stromnetzverbunds oder eines autarken Stromversorgungssystems, wobei das Hubspeicherwerk eine Vielzahl einzelansteuerbarer Hubmodule (4) sowie eine mit dem Stromnetz (9) verbundene zentrale Steuerungs- und Regelungseinheit (5) umfasst,
wobei jedes der Hubmodule (4) aufweist:
- eine Seilwinde (4.1) mit mindestens einem Windenseil (4.3) und mit einem im Motor- und Generatorbetrieb betreibbaren, als Elektromotor ausgebildeten Windenmotor,
- ein am Windenseil (4.3) aufgehängtes Hubgewicht (4.2) zur Speicherung von Energie in Form von Lageenergie des Hubgewichts (4.2) durch Anheben des Hubgewichts (4.2) mittels der Seilwinde (4.1) und zur Nutzung der gespeicherten Lageenergie durch Absenken des Hubgewichts (4.2) mittels der Seilwinde (4.1),
- ein Führungssystem zur Führung des Hubgewichts (4.2) beim Anheben oder beim Absenken des Hubgewichts (4.2), und
- eine Elektronikeinheit zur Steuerung des Windenmotors und zur Stromkonvertierung,
wobei die Elektronikeinheit und der Windenmotor der Seilwinde (4.1) jedes der Hubmodule (4) jeweils über Stromleitungen (11) und über Daten- und Steuerleitungen (12) mit der zentralen Steuerungs- und Regelungseinheit (5) verbunden sind,
und wobei das Hubspeicherwerk ausgebildet ist, elektrische Energie aus dem Stromnetz (9) durch mittels der zentralen Steuerungs- und Regelungseinheit (5) individuell gesteuertes Anheben der Hubgewichte (4.2) in Lageenergie der Hubgewichte (4.2) zu wandeln und die gespeicherte Lageenergie der Hubgewichte (4.2) durch individuell gesteuertes Absenken der Hubgewichte (4.2) in elektrische Energie rückzuwandeln,
**dadurch gekennzeichnet, dass**
- die Seilwinde (4.1) jedes der Hubmodule (4) eine bodenseitig im jeweiligen Hubmodul (4) angeordnete, zwei der Windenseile (4.3) aufweisende Doppel-Seilwinde ist, wobei die beiden Windenseile (4.3) in parallel nebeneinander angeordneten Einlagenwicklungen auf der Doppel-Seilwinde gewickelt sind,
- das Hubgewicht (4.2) des jeweiligen Hubmoduls (4) an den beiden Windenseilen (4.3), die an zwei voneinander beabstandeten Aufhängungspunkten am Hubgewicht (4.2) befestigt sind, aufgehängt ist, und
- das zur Führung des Hubgewichts (4.2) ausgebildete Führungssystem jedes der Hubmodule (4) die beiden Windenseile (4.3) und für jedes der beiden Windenseile (4.3) jeweils eine Seilführung, die das jeweilige Windenseil (4.3) deckenseitig im Hubmodul (4) umlenkt, umfasst, wobei die jeweilige Seilführung zur Umlenkung des jeweiligen Windenseils (4.3) eine deckenseitig im jeweiligen Hubmodul (4) angeordnete erste Umlenkrolle (4.4) in Form einer festen Seilrolle aufweist, wobei das Windenseil (4.3) einen ersten Seilabschnitt zwischen der Seilwinde (4.1) und der ersten Umlenkrolle (4.4) und einen gegenläufigen zweiten Seilabschnitt zwischen der ersten Umlenkrolle (4.4) und dem Aufhängungspunkt am Hubgewicht (4.2) ausbildet.

2. Hubspeicherwerk nach Anspruch 1, **dadurch gekennzeichnet, dass** jedes der Windenseile (4.3) ein Kunststoffseil ist.

3. Hubspeicherwerk nach Anspruch 1 oder 2, **dadurch gekennzeichnet, dass** jede der Seilführungen eine zweite Umlenkrolle (4.5) in Form einer losen Seilrolle aufweist, wobei die zweite Umlenkrolle (4.5) am jeweiligen Aufhängungspunkt des Hubgewichts (4.2) angebracht ist, und wobei das jeweilige Windenseil (4.3) einen dritten Seilabschnitt vom Aufhängungspunkt des Hubgewichts (4.2) zu einem deckenseitig im Hubmodul (4) angeordneten Befestigungspunkt des Windenseils (4.3) ausbildet.

4. Hubspeicherwerk nach einem der Ansprüche 1 bis 3, **dadurch gekennzeichnet, dass** die zweiten Seilabschnitte der beiden Windenseile (4.3) parallel zueinander geführt sind.

5. Hubspeicherwerk nach einem der Ansprüche 1 bis 4, **dadurch gekennzeichnet, dass** die zweiten Seilabschnitte der beiden Windenseile (4.3) lotrecht geführt sind.

6. Hubspeicherwerk nach einem der Ansprüche 1 bis 5, **dadurch gekennzeichnet, dass** das Hubspeicherwerk ein Kühlsystem mit einem geschlossenen Kühlmittelkreislauf (13) zur Kühlung einer oder mehrerer Wärmequellen und zur Abführung der Abwärme aus dem Kühlmittelkreislauf (13) an eine Wärmesenke umfasst, wobei die Wärmequellen die Windenmotoren und/oder die Elektronikeinheiten der Hubmodule (4) sind, wobei die Windenmotoren und/oder die Elektronikeinheiten der Hubmodule (4) zu deren Kühlung jeweils ein in den Kühlmittelkreislauf (13) eingebundenes Kühlaggregat aufweisen, und wobei ein in den Kühlmittelkreislauf (13) eingebundener zentraler Wärmeübertrager (15) des Kühlsystems die Wärmesenke bildet.

7. Hubspeicherwerk nach Anspruch 6, **dadurch gekennzeichnet, dass** der die Wärmesenke des Kühlmittelkreislaufs (13) bildende zentrale Wärmeübertrager (15) eine Fernwärmeübergabestation zur Einspeisung der Abwärme aus dem Kühlsystem in ein Fernwärmenetz ist.

8. Hubspeicherwerk nach einem der Ansprüche 1 bis 7, **dadurch gekennzeichnet, dass** die Elektronikeinheit jedes der Hubmodule (4) jeweils mindestens einen Wechselrichter zur Stromkonvertierung von Gleichstrom in Wechselstrom umfasst.

9. Hubspeicherwerk nach Anspruch 8, **dadurch gekennzeichnet, dass** jeder der Wechselrichter zur Aufnahme und Bereitstellung von Blindstrom ausgebildet ist, wobei die zentrale Steuerungs- und Regelungseinheit (5) eingerichtet ist, die Wechselrichter der Hubmodule (4) zur Blindstromkompensation im Stromnetz (9) zu steuern.

10. Hubspeicherwerk nach einem der Ansprüche 1 bis 9, **dadurch gekennzeichnet, dass** das Hubspeicherwerk zusätzlich zum Stromnetz (9) an lokal installierte regenerative Elektroenergieerzeuger zur Einspeisung von regenerativ erzeugter Elektroenergie in das Hubspeicherwerk angeschlossen ist, wobei die regenerativen Elektroenergieerzeuger Elektroenergie wahlweise in Form von Gleichstrom oder Wechselstrom bereitstellen.
- Es folgen 6 Seiten Zeichnungen -

## Claims

1. Gravity energy storage plant for storing and feeding back electrical energy and for grid load adjustment in a power grid (9), connected to the gravity energy storage plant, of an interconnected grid or of an autonomous power supply system, wherein the gravity energy storage plant comprises a plurality of individually controllable lifting modules (4) and a central control and regulating unit (5) connected to the power grid (9),
wherein each of the lifting modules (4) comprises:
- a rope winch (4.1) having at least one winch rope (4.3) and a winch motor which is in the form of an electric motor and can be operated in motor mode and generator mode,
- a lifting weight (4.2) suspended from the winch rope (4.3), for storing energy in the form of potential energy of the lifting weight (4.2) by raising the lifting weight (4.2) by means of the rope winch (4.1) and for using the stored potential energy by lowering the lifting weight (4.2) by means of the rope winch (4.1),
- a guide system for guiding the lifting weight (4.2) when raising or lowering the lifting weight (4.2), and
- an electronics unit for controlling the winch motor and for power conversion,
wherein the electronics unit and the winch motor of the rope winch (4.1) of each of the lifting modules (4) are respectively connected to the central control and regulating unit (5) via power lines (11) and via data and control lines (12),
and wherein the gravity energy storage plant is configured to convert electrical energy from the power grid (9) into potential energy of the lifting weights (4.2) by raising the lifting weights (4.2) under individual control by means of the central control and regulating unit (5), and to convert the stored potential energy of the lifting weights (4.2) back into electrical energy by lowering the lifting weights (4.2) under individual control,
**characterised in that**
- the rope winch (4.1) of each of the lifting modules (4) is a double-rope winch which is arranged at floor level in the respective lifting module (4) and has two of the winch ropes (4.3), wherein the two winch ropes (4.3) are wound on the double-rope winch in single-layer windings arranged parallel and next to one another,
- the lifting weight (4.2) of the respective lifting module (4) is suspended from the two winch ropes (4.3), which are fastened to the lifting weight (4.2) at two suspension points spaced apart from one another, and
- the guide system of each of the lifting modules (4), configured for guiding the lifting weight (4.2), comprises the two winch ropes (4.3) and, for each of the two winch ropes (4.3), a respective rope guide which deflects the respective winch rope (4.3) at ceiling level in the lifting module (4), wherein the respective rope guide for deflecting the respective winch rope (4.3) comprises a first deflection pulley (4.4) in the form of a fixed pulley arranged at ceiling level in the respective lifting module (4), wherein the winch rope (4.3) forms a first rope section between the rope winch (4.1) and the first deflection pulley (4.4) and an oppositely running second rope section between the first deflection pulley (4.4) and the suspension point on the lifting weight (4.2).

2. Gravity energy storage plant according to claim 1, **characterised in that** each of the winch ropes (4.3) is a plastics rope.

3. Gravity energy storage plant according to claim 1 or 2, **characterised in that** each of the rope guides comprises a second deflection pulley (4.5) in the form of a movable pulley, wherein the second deflection pulley (4.5) is attached at the respective suspension point of the lifting weight (4.2), and wherein the respective winch rope (4.3) forms a third rope section from the suspension point of the lifting weight (4.2) to a fastening point of the winch rope (4.3) arranged at ceiling level in the lifting module (4).

4. Gravity energy storage plant according to any one of claims 1 to 3, **characterised in that** the second rope sections of the two winch ropes (4.3) are guided parallel to one another.

5. Gravity energy storage plant according to any one of claims 1 to 4, **characterised in that** the second rope sections of the two winch ropes (4.3) are guided vertically.

6. Gravity energy storage plant according to any one of claims 1 to 5, **characterised in that** the gravity energy storage plant comprises a cooling system having a closed coolant circuit (13) for cooling one or more heat sources and for discharging waste heat from the coolant circuit (13) to a heat sink, wherein the heat sources are the winch motors and/or the electronics units of the lifting modules (4), wherein the winch motors and/or the electronics units of the lifting modules (4) each comprise, for cooling thereof, a cooling unit incorporated in the coolant circuit (13), and wherein a central heat exchanger (15) of the cooling system, incorporated in the coolant circuit (13), forms the heat sink.

7. Gravity energy storage plant according to claim 6, **characterised in that** the central heat exchanger (15) forming the heat sink of the coolant circuit (13) is a district-heating transfer station for feeding waste heat from the cooling system into a district-heating network.

8. Gravity energy storage plant according to any one of claims 1 to 7, **characterised in that** the electronics unit of each of the lifting modules (4) respectively comprises at least one inverter for power conversion from direct current into alternating current.

9. Gravity energy storage plant according to claim 8, **characterised in that** each of the inverters is configured to absorb and supply reactive current, wherein the central control and regulating unit (5) is configured to control the inverters of the lifting modules (4) for reactive-current compensation in the power grid (9).

10. Gravity energy storage plant according to any one of claims 1 to 9, **characterised in that**, in addition to the power grid (9), the gravity energy storage plant is connected to locally installed renewable electrical-energy generators for feeding renewable electrical energy into the gravity energy storage plant, wherein the renewable electrical-energy generators selectively provide electrical energy in the form of direct current or alternating current.

## Revendications

1. Mécanisme de stockage par levage pour le stockage et la réinjection d'énergie électrique et pour l'adaptation de la charge du réseau dans un réseau électrique (9) relié au mécanisme de stockage par levage d'un réseau électrique interconnecté ou d'un système d'alimentation électrique autonome, le mécanisme de stockage par levage comprend une pluralité de modules de levage (4) pouvant être commandés individuellement ainsi qu'une unité centrale de commande et de régulation (5) reliée au réseau électrique (9), chacun des modules de levage (4) présentant :
- un treuil à câble (4.1) avec au moins un câble de treuil (4.3) et avec un moteur de treuil, réalisé sous la forme d'un moteur électrique, pouvant fonctionner en mode moteur et en mode générateur,
- un poids de levage (4.2) suspendu au câble de treuil (4.3) pour le stockage d'énergie sous forme d'énergie potentielle du poids de levage (4.2) par levage du poids de levage (4.2) au moyen du treuil à câble (4.1) et pour l'utilisation de l'énergie potentielle stockée par abaissement du poids de levage (4.2) au moyen du treuil à câble (4.1),
- un système de guidage pour le guidage du poids de levage (4.2) lors du levage ou de l'abaissement du poids de levage (4.2), et
- une unité électronique pour la commande du moteur de treuil et la conversion de courant,
dans lequel l'unité électronique et le moteur de treuil du treuil à câble (4.1) de chacun des modules de levage (4) sont respectivement reliés par l'intermédiaire de lignes électriques (11) et de lignes de données et de commande (12) à l'unité centrale de commande et de régulation (5),
et dans lequel ledit mécanisme de stockage par levage est conçu pour convertir l'énergie électrique provenant du réseau électrique (9) en énergie potentielle des poids de levage (4.2) par levage des poids de levage (4.2) commandé individuellement au moyen de l'unité centrale de commande et de régulation (5) et pour reconvertir l'énergie potentielle stockée des poids de levage (4.2) en énergie électrique par abaissement des poids de levage (4.2) commandé individuellement, **caractérisé en ce que**
- le treuil à câble (4.1) de chacun des modules de levage (4) est un treuil à câble double disposé côté sol dans le module de levage (4) respectif et présentant deux des câbles de treuil (4.3), les deux câbles de treuil (4.3) étant enroulés sur le treuil à câble double sous la forme d'enroulements à une seule couche disposés parallèlement l'un à côté de l'autre,
- le poids de levage (4.2) du module de levage (4) respectif est suspendu aux deux câbles de treuil (4.3) qui sont fixés au poids de levage (4.2) en deux points de suspension espacés l'un de l'autre, et
- le système de guidage de chacun des modules de levage (4), conçu pour guider le poids de levage (4.2), comprend les deux câbles de treuil (4.3) et, pour chacun des deux câbles de treuil (4.3), un guide-câble respectif qui dévie le câble de treuil (4.3) respectif côté plafond dans le module de levage (4), le guide-câble respectif présentant, pour la déviation du câble de treuil (4.3) respectif, une première poulie de déviation (4.4) sous la forme d'une poulie à câble fixe, disposée côté plafond dans le module de levage (4) respectif, le câble de treuil (4.3) formant une première section de câble entre le treuil à câble (4.1) et la première poulie de déviation (4.4) et une seconde section de câble en sens opposé entre la première poulie de déviation (4.4) et le point de suspension sur le poids de levage (4.2).

2. Mécanisme de stockage par levage selon la revendication 1, **caractérisé en ce que** chacun des câbles de treuil (4.3) est un câble en plastique.

3. Mécanisme de stockage par levage selon l'une des revendications 1 ou 2, **caractérisé en ce que** chacun des guides-câbles présente une seconde poulie de déviation (4.5) sous la forme d'une poulie à câble mobile, la seconde poulie de déviation (4.5) étant montée au point de suspension respectif du poids de levage (4.2), et le câble de treuil (4.3) respectif formant une troisième section de câble allant du point de suspension du poids de levage (4.2) à un point de fixation du câble de treuil (4.3) disposé côté plafond dans le module de levage (4).

4. Mécanisme de stockage par levage selon l'une quelconque des revendications 1 à 3, **caractérisé en ce que** les secondes sections de câble des deux câbles de treuil (4.3) sont guidées parallèlement l'une à l'autre.

5. Mécanisme de stockage par levage selon l'une quelconque des revendications 1 à 4, **caractérisé en ce que** les secondes sections de câble des deux câbles de treuil (4.3) sont guidées verticalement.

6. Mécanisme de stockage par levage selon l'une quelconque des revendications 1 à 5, **caractérisé en ce que** ledit mécanisme de stockage par levage comprend un système de refroidissement avec un circuit de fluide de refroidissement fermé (13) pour le refroidissement d'une ou de plusieurs sources de chaleur et pour l'évacuation de la chaleur résiduelle du circuit de fluide de refroidissement (13) vers un puits de chaleur, les sources de chaleur étant les moteurs de treuil et/ou les unités électroniques des modules de levage (4), les moteurs de treuil et/ou les unités électroniques des modules de levage (4) présentant chacun, pour leur refroidissement, un groupe de refroidissement intégré dans le circuit de fluide de refroidissement (13), et un échangeur de chaleur central (15) du système de refroidissement, intégré dans le circuit de fluide de refroidissement (13), formant le puits de chaleur.

7. Mécanisme de stockage par levage selon la revendication 6, **caractérisé en ce que** l'échangeur de chaleur central (15) formant le puits de chaleur du circuit de fluide de refroidissement (13) est une station de transfert de chaleur à distance destinée à l'injection de la chaleur résiduelle provenant du système de refroidissement dans un réseau de chauffage à distance.

8. Mécanisme de stockage par levage selon l'une quelconque des revendications 1 à 7, **caractérisé en ce que** l'unité électronique de chacun des modules de levage (4) comprend respectivement au moins un onduleur pour la conversion du courant continu en courant alternatif.

9. Mécanisme de stockage par levage selon la revendication 8, **caractérisé en ce que** chacun des onduleurs est conçu pour absorber et fournir un courant réactif, l'unité centrale de commande et de régulation (5) étant conçue pour commander les onduleurs des modules de levage (4) pour la compensation du courant réactif dans le réseau électrique (9).

10. Mécanisme de stockage par levage selon l'une quelconque des revendications 1 à 9, **caractérisé en ce que** ledit mécanisme de stockage par levage est raccordé, en plus du réseau électrique (9), à des générateurs d'énergie électrique renouvelable installés localement pour l'injection, dans le mécanisme de stockage par levage, d'énergie électrique générée à partir de sources renouvelables, les générateurs d'énergie électrique renouvelable fournissant de l'énergie électrique au choix sous forme de courant continu ou de courant alternatif.
